# EUROPEAN PATENT APPLICATION

(11) **EP 4 841 820 A1**
(43) Date of publication of application: **18.11.2026**
(21) Application number: 25848916.0
(22) Date of filing: 29.07.2025
(51) Int. Cl.: H01M 50/636, H01M 50/152

(54) **BATTERY CELL AND BATTERY PACK AND VEHICLE INCLUDING SAME**

(30) Priority: 30.07.2024 KR 20240101084
(71) Applicant: LG Energy Solution, Ltd., Seoul 07335 (KR)
(72) Inventor: PARK, Jeong-Ho, Daejeon 34122 (KR); CHO, Sung-Min, Daejeon 34122 (KR); KANG, Tae-Gu, Daejeon 34122 (KR); KIM, Hoon-Sik, Daejeon 34122 (KR); MUN, Hong-Jae, Daejeon 34122 (KR); LEE, Jae-Ik, Daejeon 34122 (KR)
(74) Representative: Goddar, Heinz J.
(86) International application number: PCT/KR2025/011311
(87) International publication number: WO 2026/029556

(57) **Abstract**

A battery cell according to an embodiment of the present disclosure may include an electrode assembly in which a first electrode, a second electrode, and a separator interposed therebetween are wound around a winding axis; a can configured to accommodate the electrode assembly through an opened end formed on one side; a lid covering the opened end and having an injection port; and a plug configured to seal the injection port, wherein the plug may include an insertion portion configured to be inserted into the injection port and a lid coupling portion formed to extend upward from the insertion portion in the winding axis direction and seated on the lid, and the diameter of the insertion portion may be larger than the inner diameter of the injection port.

## Description

### TECHNICAL FIELD

The present disclosure relates to a battery cell, and a battery pack and a vehicle including the same.

This application is based on and claims priority from Korean Patent Application No. 10-2024-0101084, filed on July 30, 2024, with the Korean Intellectual Property Office, the disclosure of which is incorporated herein in its entirety by reference.

### BACKGROUND ART

A cylindrical battery cell is a structure that accommodates a jelly-roll type electrode assembly inside a cylindrical metal can, and is more robust to impact or temperature than a pouch type battery. Accordingly, there is an increasing demand for using a metal can type cell as a battery cell applied to a vehicle battery pack.

The process of manufacturing a battery cell utilizing a cylindrical can includes deep drawing a metal sheet to mold a circular bottom portion and a circular tubular side wall portion connected thereto, accommodating an electrode assembly therein, and then covering the opened end of the side wall portion with a lid to finish.

The method of covering the opened end of the battery can with a lid and fixing the lid and the battery can may be applied by crimping or seam welding.

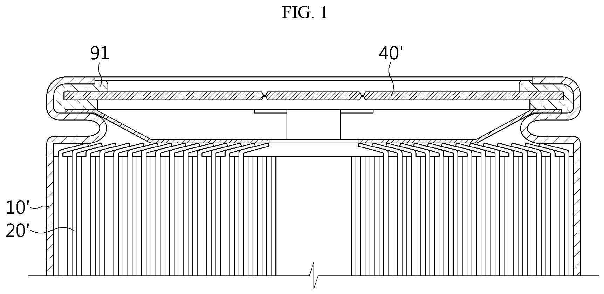

FIG. 1 is a view showing a method of fixing a lid and a battery can by a conventional crimping method.

Referring to FIG. 1, crimping is a method of fixing the lid 40' by physically compressing the edge of the lid 40' to the opened end of the can 10' with a sealing ring 91 interposed therebetween. Since crimping is a physical fixing method that does not apply heat, it is allowable to work while the electrolyte is injected into the can 10'. Therefore, the crimping method has the advantage of being able to omit a separate injection port structure and a structure for sealing the same. However, crimping is structurally more complex compared to welding, and thus there are limitations in securing the internal volume of the can 10' capable of accommodating the electrode assembly 20'.

In contrast, seam welding is a method of welding the circumference of the front end of the side wall portion of the battery can and the circumference of the edge of the lid together along the circumferential direction, and since the fixing structure is simple, the volume of the electrode assembly that can be accommodated inside the battery can may be further secured. Therefore, the seam welding method is more advantageous in securing electric capacity compared to the same volume of the battery can.

For example, a sealing member such as a metal ball may be forcibly press-fitted into the injection port to seal and fix the injection port. This is a method in which a metal ball having a larger diameter than the inner circumferential surface of the injection port is forcibly press-fitted into the injection port, and the elastic deformation of the inner circumferential surface of the injection port and the metal ball causes their surfaces to be mutually compressed, resulting in sealing.

Conventionally, there has been a case of applying an aluminum ball as a metal ball for sealing the injection port. The aluminum ball may be fired at a low temperature, and thus when forcibly press-fitting an aluminum ball slightly larger than the injection port, the shape of the aluminum may be deformed to seal the injection port. However, when the lid itself where the injection port is formed is a negative electrode of the battery electrode, the aluminum ball cannot be used.

On the other hand, if a steel ball is used instead of aluminum, sealing should be achieved between the rigid lid and the rigid ball. However, during the process of forcibly press-fitting the steel ball into the injection port of the lid, scratches parallel to the press-fit direction occur on the inner circumferential surface of the injection port and the surface of the steel ball. These scratches cause a problem of acting as channels through which gas leaks out of the battery cell.

However, if the steel ball is press-fitted with a very strong force to eliminate even these channels, the lid itself is deformed in the press-fit direction, which may cause not only an appearance defect of the lid, but also a short circuit due to the contact between the deformed lid and the electrode assembly inside the can.

In addition, blind riveting may be applied to physically seal the injection port. This method also requires sealing between the rigid rivet and the rigid lid, but scratches may occur during the riveting process, causing the same problem as above.

Accordingly, a method of coating the surface of the steel ball with a polymer material (rubber, plastic) having high chemical resistance and mechanical rigidity may be considered. However, this material is expensive, and there is a risk that the polymer material may deteriorate due to repeated temperature shock from alternating high and low temperatures, which may also lead to gas leakage.

Meanwhile, in order to reduce the possibility of gas leakage between the rigid lid and the rigid injection port cap, a method of covering the injection port with a steel cap and then welding the gap between the cap and the injection port to seal it may be considered. However, even with this method, the heat generated when welding the cap to the lid causes the gas in which the electrolyte inside the can is vaporized to be discharged. Then, there is a risk that cracks or gas channels may be formed at the lid coupling portion along the gas discharge path, and there is a risk of electrolyte leakage or fire due to high-temperature heat, gas, and oxygen.

Therefore, there is a need for a sealing structure of the injection port with improved sealing performance, which has no electrolyte leakage, no gas leakage due to electrolyte vaporization, and no risk of welding defects or ignition.

### DISCLOSURE

### Technical Problem

The present disclosure is devised in consideration of the above-described problem, and therefore the present disclosure is directed to providing a sealing structure and sealing method for an injection port that has no risk of welding defects or ignition due to electrolyte gas even when welding is applied to seal the injection port.

Additionally, the present disclosure is directed to providing a battery cell including such a sealing structure.

Additionally, the present disclosure is directed to providing a method for manufacturing a battery cell using such a sealing method.

Additionally, the present disclosure is directed to providing a battery cell with high energy density by eliminating the beading and crimping structures in the battery cell, and a vehicle equipped with a battery pack applying the same.

The technical problems of the present disclosure are not limited to the above-described objects, and other objects and advantages of the present disclosure not mentioned herein may be understood by the following description, and will be more clearly understood by the embodiments of the present disclosure. Additionally, it will be easily understood that the objects and advantages of the present disclosure may be realized by the means and combinations thereof indicated in the claims.

### Technical Solution

A battery cell according to an embodiment of the present disclosure for solving the above-described problem may include an electrode assembly in which a first electrode, a second electrode, and a separator interposed therebetween are wound around a winding axis; a can configured to accommodate the electrode assembly through an opened end formed on one side; a lid covering the opened end and having an injection port; and a plug configured to seal the injection port, wherein the plug may include an insertion portion configured to be inserted into the injection port and a lid coupling portion formed to extend upward from the insertion portion in the winding axis direction and seated on the lid, and the diameter of the insertion portion may be larger than the inner diameter of the injection port.

A tolerance between the diameter of the insertion portion and the inner diameter of the injection port may be 50 µm or more and 150 µm or less.

The diameter of the lid coupling portion may be larger than the diameter of the insertion portion.

The diameter of the lid coupling portion may be at least 1.1 times and up to 1.5 times larger than the diameter of the insertion portion.

The side surface of the insertion portion and the side surface of the lid coupling portion may be spaced apart from each other in the horizontal direction.

The side surface of the insertion portion may be an inclined surface inclined at a specified angle.

The diameter of the lower surface of the insertion portion may be formed smaller than the diameter of the upper surface of the insertion portion, and the inner diameter of the injection port may be larger than the diameter of the lower surface of the insertion portion and smaller than the diameter of the upper surface of the insertion portion.

The lid may include a body portion; and a plug coupling portion surrounding the injection port, recessed downward relative to the body portion in the winding axis direction, and configured to allow the lid coupling portion to be seated.

The lid coupling portion of the plug and the body portion of the lid may face each other in a radial direction and may be configured to be welded.

The can and the lid may be thermally bonded.

A method for manufacturing a battery cell according to an embodiment of the present disclosure may include a step of covering an opened end of a can with a lid while accommodating an electrode assembly in the can; a step of thermally bonding the edge of the lid to the can; a step of injecting an electrolyte into the can through an injection port of the lid; a step of sealing the injection port by inserting an insertion portion of a plug into the injection port; and a step of welding the lid to a lid coupling portion formed to extend upward from the insertion portion of the plug in the winding axis direction and seated on the lid.

A battery pack according to an embodiment of the present disclosure for solving the above-described problem may include a battery cell according to an embodiment of the present disclosure.

A vehicle according to an embodiment of the present disclosure for solving the above-described problem may include a battery pack according to an embodiment of the present disclosure.

### Advantageous Effects

According to one aspect of the present disclosure, there is provided a sealing structure and sealing method for an injection port that has no risk of welding defects or ignition due to electrolyte gas even when welding is applied to seal the injection port and improves the reliability of the injection port sealing.

According to one aspect of the present disclosure, the injection port is configured to allow only one unit component, a plug to be inserted therein, which may relatively enlarge the internal space of the cell and enable the width of the injection port to be formed wider, thereby improving injection efficiency.

According to one aspect of the present disclosure, a temporary sealing force may be secured by press-fitting the insertion portion of the plug to prevent external leakage of the electrolyte vapor, and a high final sealing force may be secured by thermally bonding a part of the lid and the edge of the lid coupling portion of the plug. Since thermal bonding may be performed while preventing external leakage of the electrolyte vapor, there is an effect of preventing welding defects and ignition, for example, when laser welding is used for thermal bonding.

According to one aspect of the present disclosure, the injection port may be sealed using two processes, namely press-fit and thermal bonding, with one unit component. Accordingly, the number of parts may be reduced and the assembly man-hours may be reduced.

However, effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a view showing a method of fixing a lid and a battery can by a conventional crimping method.
FIG. 2 is a perspective view of a battery cell according to an embodiment of the present disclosure.
FIG. 3 is a perspective view showing a state before laminating a first electrode, a second electrode, and separators for manufacturing an electrode assembly to be accommodated in a battery can according to an embodiment of the present disclosure.
FIG. 4 is a perspective view of an electrode assembly manufactured by winding the laminate of FIG. 3 into a jelly-roll shape.
FIGS. 5 and 6 are perspective views showing a state in which a current collector plate is respectively bonded to both ends of an electrode assembly according to an embodiment of the present disclosure.
FIG. 7 is a cross-sectional view showing a process of accommodating an electrode assembly according to an embodiment of the present disclosure in a battery can.
FIG. 8 is a cross-sectional view showing a state in which a can accommodating an electrode assembly according to an embodiment of the present disclosure is covered with a lid and sealed.
FIG. 9 is a cross-sectional view showing a state in which the injection port of a lid is sealed by a plug according to an embodiment of the present disclosure.
FIG. 10 is a cross-sectional view showing a plug according to an embodiment of the present disclosure.
FIG. 11 is a cross-sectional view showing a state in which a plug is inserted into a lid according to an embodiment of the present disclosure.
FIG. 12 is a cross-sectional view showing a state in which a plug and a lid are coupled according to an embodiment of the present disclosure.
FIG. 13 is a cross-sectional view showing a state in which a plug is inserted into a lid according to another embodiment of the present disclosure.
FIG. 14 is a cross-sectional view showing a state in which a plug and a lid are coupled according to another embodiment of the present disclosure.
FIG. 15 is a cross-sectional view showing a state in which a lid and a plug are coupled according to still another embodiment of the present disclosure.
FIG. 16 is a cross-sectional view showing a plug according to still another embodiment of the present disclosure.
FIG. 17 is a cross-sectional view showing a state in which a lid and a plug are coupled according to still another embodiment of the present disclosure.
FIG. 18 is a flowchart of a method for manufacturing a battery cell to which the injection port sealing structure of the present disclosure is applied.
FIG. 19 is a view for describing a battery pack according to an embodiment of the present disclosure.
FIG. 20 is a view for describing a vehicle including the battery pack of FIG. 19.

### BEST MODE

Hereinafter, preferred embodiments of the present disclosure will be described in detail with reference to the accompanying drawings.

The present disclosure is not limited to the embodiments disclosed below, but may be modified in various ways and implemented in various forms. The present embodiments are provided merely to ensure complete disclosure of the present disclosure and to fully inform those having ordinary skill in the art of the scope of the disclosure. Therefore, the present disclosure is not limited to the embodiments disclosed below, but should be understood to include all modifications, equivalents, and substitutes within the technical ideas and scope of the present disclosure, as well as the substitution or addition of the configurations of one embodiment to those of another.

Additionally, the present disclosure includes various embodiments. For each embodiment, redundant descriptions of substantially identical or similar configurations will be omitted, and differences will be mainly described.

The accompanying drawings are intended solely to facilitate understanding of the embodiments disclosed herein, and the technical ideas disclosed herein are not limited by the accompanying drawings. All modifications, equivalents, and substitutes within the ideas and technical scope of the present disclosure should be understood as being included herein. In the drawings, components may be exaggerated in size or thickness for ease of understanding, but this should not be interpreted as limiting the scope of protection of the present disclosure.

The terms used herein are solely used to describe specific implementations or embodiments and are not intended to limit the present disclosure. And, singular expressions include plural expressions unless the context clearly indicates otherwise. Terms such as 'include' and 'comprise' in this specification are intended to specify the presence of a feature, number, step, operation, component, part, or combination thereof described herein. That is, terms such as 'include' and 'comprise' in this specification should be understood as not excluding the presence or addition of one or more other features, numbers, steps, operations, components, parts, or combinations thereof in advance.

Terms including ordinal numbers, such as first and second, may be used to describe various components, but such components are not limited by these terms. These terms are used solely to distinguish one component from another. Therefore, unless stated to the contrary, it is obvious that the first component may be the second component.

Throughout the specification, unless expressly stated to the contrary, each component may be singular or plural.

Singular expressions used herein include plural expressions unless the context clearly indicates otherwise. In the present application, terms such as "comprise" or "include" should not be construed as necessarily including all of the various components or steps described in the specification, but rather should be construed as not including some of the components or steps, or as further including additional components or steps.

When it is described that a component is "connected" or "coupled" to another component, the components may be directly connected to or coupled to each other, but it should be understood that there may be other components therebetween. On the other hand, when it is described that a component is "directly connected" or "directly coupled" to another component, it should be understood that there are no other components therebetween.

When it is described that any component is "above" or "below" another component, it should be understood that the component is disposed directly above another component, and furthermore, there may also be the other components therebetween.

Unless otherwise defined, all terms used herein, including technical or scientific terms, have the same meanings as commonly understood by those having ordinary skill in the art to which the present disclosure pertains. Terms defined in commonly used dictionaries should be interpreted to have meanings consistent with their meanings in the context of the relevant technology, and should not be interpreted in an ideal or overly formal sense unless explicitly defined herein.

Meanwhile, terms indicating directions such as upper, lower, left, right, front, and rear may be used in the present disclosure, but these terms are only for convenience of description, and it is obvious to those skilled in the art that the terms may vary depending on the position, arrangement, rotation of a reference object, or the position of an observer.

Throughout the specification, when referring to "A and/or B", it means A, B or A and B, unless expressly stated to the contrary, and when referring to "C to D", it means C or more and D or less, unless expressly stated to the contrary.

The present disclosure may be implemented by each of the following embodiments independently. Furthermore, the present disclosure may be implemented by combining two or more of the following embodiments. Each of the following embodiments may be implemented independently and may also be freely combined with each other.

For convenience of description, the direction along the length direction of the winding axis of the electrode assembly wound in the form of a jelly-roll is referred to as the winding axis direction in this specification. And, the direction surrounding the winding axis of the electrode assembly is referred to as the circumferential direction, and the direction in which the electrode assembly is wound along the winding axis is referred to as the winding direction. And, the direction moving away from or toward the winding axis of the electrode assembly is referred to as the radial direction.

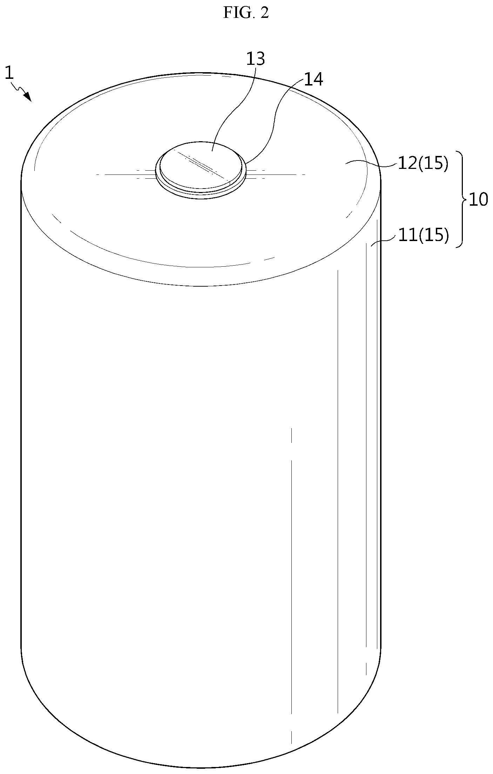

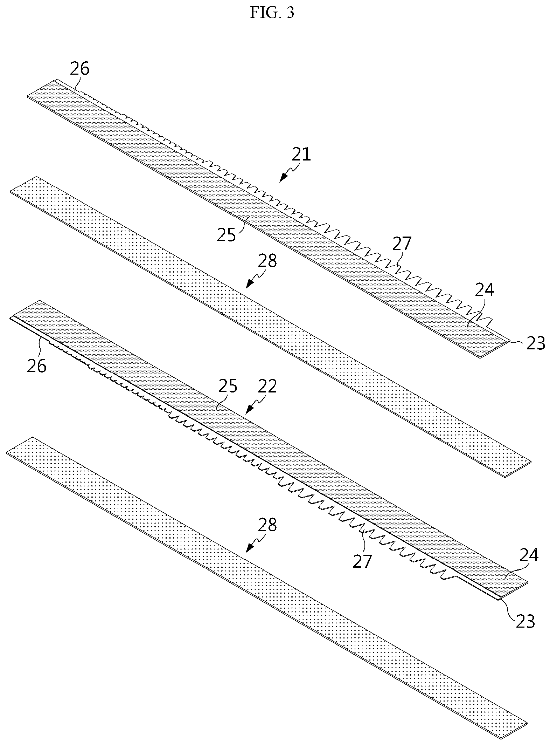

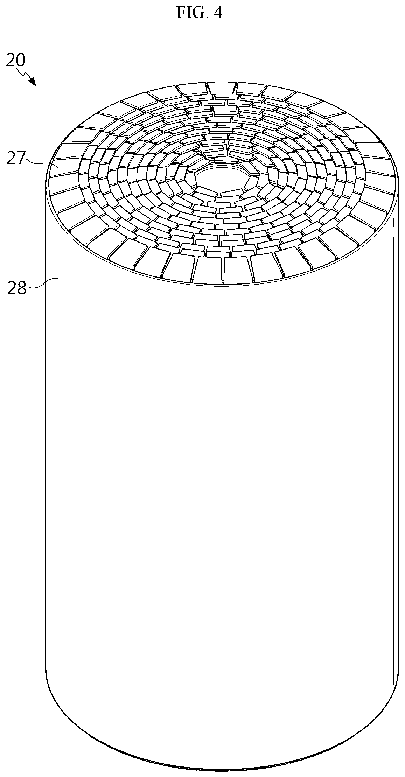

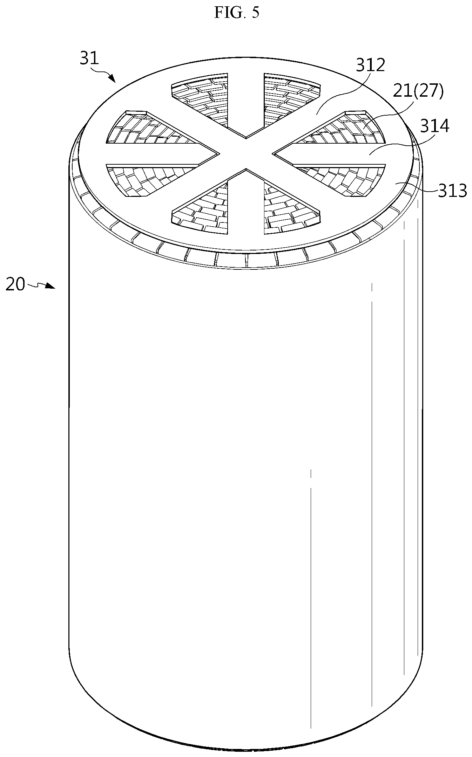

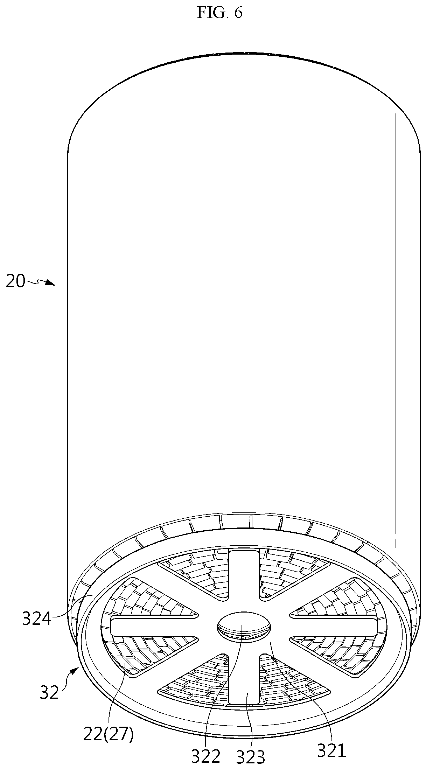

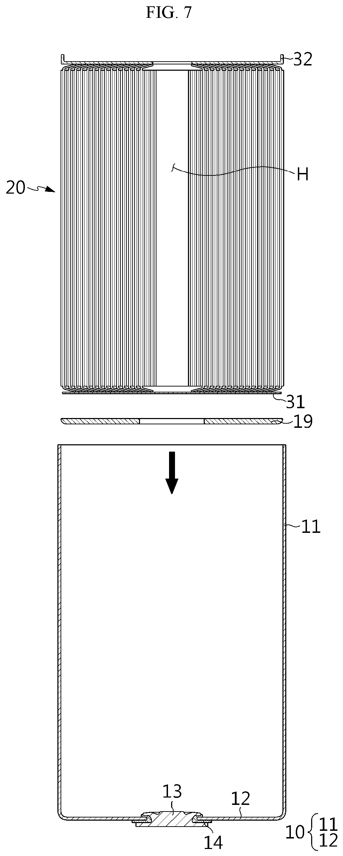

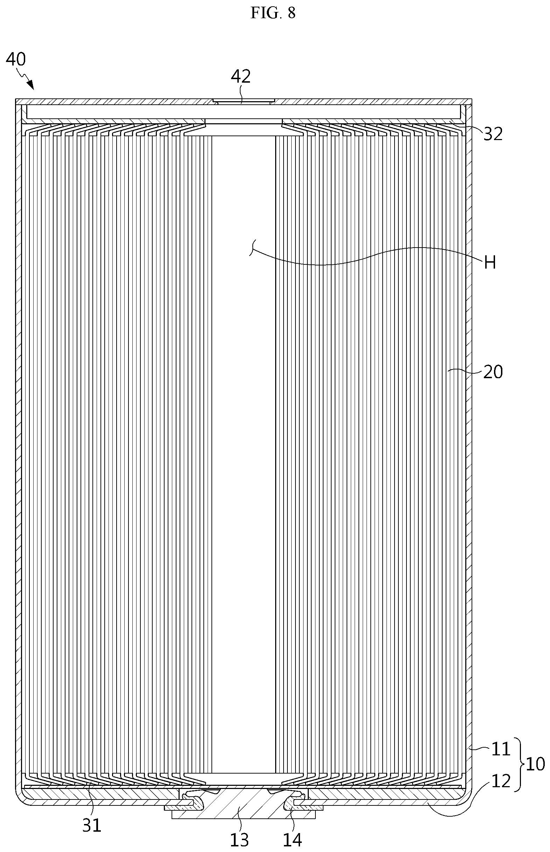

FIG. 2 is a perspective view of a battery cell according to an embodiment of the present disclosure. FIG. 3 is a perspective view showing a state before laminating a first electrode, a second electrode, and separators for manufacturing an electrode assembly to be accommodated in a battery can according to an embodiment of the present disclosure. FIG. 4 is a perspective view of an electrode assembly manufactured by winding the laminate of FIG. 3 into a jelly-roll shape. FIGS. 5 and 6 are perspective views showing a state in which a current collector plate is respectively bonded to both ends of an electrode assembly according to an embodiment of the present disclosure. FIG. 7 is a cross-sectional view showing a process of accommodating an electrode assembly according to an embodiment of the present disclosure in a battery can. FIG. 8 is a cross-sectional view showing a state in which a can accommodating an electrode assembly according to an embodiment of the present disclosure is covered with a lid and sealed.

Hereinafter, an embodiment of a battery cell 1 to which the injection port 42 sealing structure of the present disclosure is applied will be described in detail with reference to FIGS. 2 to 8.

The battery cell 1 may be manufactured by embedding a cylindrical electrode assembly 20 inside a cylindrical battery can 10.

The battery cell 1 of the embodiment may include an electrode assembly 20, current collector plates 31, 32 electrically connected to the electrode assembly 20, and a can 10 accommodating the electrode assembly 20 and the current collector plates 31, 32.

The can 10 may include a side wall portion 11 extending in the winding axis direction between a first end and a second end, and a bottom portion 12 connected to the first end of the side wall portion 11 and extending in the radial direction. The second end of the side wall portion 11 in the winding axis direction may be open.

The opened end of the side wall portion 11 may be sealed by covering it with a lid 40 after accommodating the electrode assembly 20 in the can 10.

The bottom portion 12 may have a disk shape with a hole formed in the center, and the side wall portion 11 may have a circular tubular shape.

The bottom portion 12 and the side wall portion 11 may be manufactured by molding a metal sheet with nickel plating on the surface of steel by a deep drawing process, and trimming the front end of the side wall portion 11 with a punch while gripping it with a blank holder. Of course, the material of the can 10 is not limited thereto.

A first electrode terminal 13 may be fitted into the hole. The first electrode terminal 13 may be riveted and fixed to the bottom portion 12 with a terminal gasket 14 interposed therebetween. The terminal gasket 14 may be interposed between the first electrode terminal 13 and the bottom portion 12 to seal the inside and outside of the can 10 to prevent leakage of the electrolyte, and to electrically insulate the first electrode terminal 13 from the bottom portion 12.

However, the connection method between the first electrode terminal 13 and the bottom portion 12 is not limited thereto. For example, as long as the structure is capable of providing sealing between the first electrode terminal 13 and the bottom portion 12 and electrically insulating the first electrode terminal 13 from the bottom portion 12, various other fixing methods, such as a bolt-nut coupling method, a glass seal method, or a chrome coating & PP-MAH thermal bonding method, may also be applied.

The first electrode terminal 13 may have a first polarity, and the can 10 may have a second polarity. That is, the bottom portion 12 of the can 10, the side wall portion 11 connected thereto, and the lid 40 connected to the side wall portion 11, which will be described later, may all have the second polarity.

Accordingly, the battery cell 1 may have both the first electrode terminal 13 and the second electrode terminal 15 disposed at the end in the winding axis, that is, the closed end, provided with the bottom portion 12. Then, the battery cell 1 may have both a busbar connected to the first electrode terminal 13 and a busbar connected to the second electrode terminal 15 positioned at the top of the battery cell 1.

In one example, the first electrode terminal 13 may be a positive electrode terminal, and the second electrode terminal 15 may be a negative electrode terminal. Of course, the opposite may also be true.

An electrode assembly 20 is accommodated within the can 10.

The electrode assembly 20 may be in the form of a jelly-roll in which the first electrode 21, the second electrode 22, and the separator 28 interposed therebetween are wound around the winding axis. The outer shape of the electrode assembly 20 along the circumferential direction of the electrode assembly 20 may be circular. However, the structure of the electrode assembly 20 is not limited by the embodiment, and may have a winding structure well known in the art.

Specifically, the electrode assembly 20 may be manufactured in the cylindrical form of a jelly-roll by preparing a first electrode 21, a second electrode 22, and separators 28 that extend to a predetermined length along the winding direction having a predetermined width as illustrated in FIG. 3, and forming a laminate by sequentially laminating the first electrode 21, the separator 28, the second electrode 22, and the separator 28, and then winding the laminate around a mandrel axis as illustrated in FIG. 4. The structure of the electrode assembly 20 is not limited by the embodiment, and may have a winding structure well known in the art.

The first electrode 21 may be a positive electrode, and the second electrode 22 may be a negative electrode. Of course, the opposite may also be true.

The first electrode 21 and the second electrode 22 are manufactured in the form of sheets. The electrode sheet is manufactured in the form of an active material layer 24 being applied to the surface of a metal foil 23. The electrode sheet has a coated portion 25 where an active material layer 24 is applied, and an uncoated portion 26 where an active material layer 24 is not applied. The positive electrode sheet has an uncoated portion 26 on one side in the width direction, and the negative electrode sheet has an uncoated portion 26 on the other side in the width direction.

The uncoated portion 26 is exposed or protrudes from the laminate in the width direction. The uncoated portion 26 itself functions as an electrode tab.

The uncoated portion 26 may be notched at predetermined intervals to form notching tabs 27 in the shape of flags.

In the embodiment, it is illustrated that the notching tabs 27 have an equilateral trapezoidal shape. However, their shapes may be various shapes such as a semicircle, a semi-ellipse, a triangle, a rectangle, a parallelogram, and the like.

Additionally, the embodiment illustrates that the notching tabs 27 arranged along the length direction have the same width. However, the width of the notching tabs may increase gradually or stepwise from the mandrel side to the outer circumferential side.

Additionally, the embodiment illustrates that the height of the notching tabs 27 increases stepwise from the mandrel side to the outer circumferential side. However, the height of these notching tabs may be implemented in a constant or gradually decreasing form.

Additionally, the embodiment illustrates a structure in which the notching tabs 27 are deleted in a predetermined section of the centripetal end of the uncoated portion 26 and a predetermined section of the centrifugal end thereof. However, it is obvious that the notching tabs may not be deleted at the centripetal end of the uncoated portion, and the notching tabs may not be deleted at the centrifugal end of the uncoated portion.

In the jelly-roll type electrode assembly 20, the notching tab 27 may be bent radially to be flattened as illustrated in FIG. 4. The notching tab 27 may be bent radially inward or outward. The embodiment illustrates a structure in which the notching tab 27 is bent radially inward.

The notching tab 27 may be bent one by one during the process of forming a jelly-roll type electrode assembly 20 by winding the laminate. Alternatively, the notching tab 27 may be bent all at once after the laminate is wound to form a jelly-roll type electrode assembly.

The notching tabs 27 of the first electrode 21 and the notching tabs 27 of the second electrode 22 that are bent radially and overlapped in this way may each provide a plane substantially perpendicular to the winding axis direction at both ends of the electrode assembly 20 in the winding axis direction.

A first current collector plate 31 and a second current collector plate 32 may each be bonded to the substantially flat surface provided by bending the notching tab 27 exposed at both ends of the electrode assembly 20 in the winding axis direction as illustrated in FIGS. 5 and 6.

The embodiment illustrates that the first current collector plate 31 is a positive electrode current collector plate and the second current collector plate 32 is a negative electrode current collector plate. The first current collector plate 31 may be made of aluminum and the second current collector plate 32 may be made of copper.

The current collector plates 31, 32 may be manufactured by punching, trimming, piercing, and bending a metal sheet.

Referring to FIG. 5, the first current collector plate 31 may include a first terminal connection portion 312 extending radially from the center, a ring portion 313 connecting the centrifugal edge of the first terminal connection portion 312 in a circumferential direction, and a first electrode connection portion 314 that extends centripetally from the ring portion 313 and is not connected to the first terminal connection portion 312. The center of the first terminal connection portion 312 may cover at least a part of the winding center hole H of the electrode assembly 20.

The first electrode connection portion 314 is bonded to the notching tab 27 of the first electrode 21 of the electrode assembly 20 by laser welding or the like prior to placing the electrode assembly 20 in the can 10. The welding line of the laser may extend radially.

Referring to FIG. 6, the second current collector plate 32 may include an inner ring portion 321 that defines a hole 322 corresponding to the winding center hole H of the electrode assembly 20 and is provided in a form surrounding the winding center hole H, a second electrode connection portion 323 extending radially from the inner ring portion 321, and a second terminal connection portion 324 that is disposed on the centrifugal side than the second electrode connection portion 323 and is connected to the inner ring portion 321. The second terminal connection portion 324 may have the form of an outer ring surrounding the edge of the second current collector plate 32.

The second electrode connection portion 323 may be bonded to the notching tab 27 of the second electrode 22 of the electrode assembly 20 by laser welding or the like prior to placing the electrode assembly 20 in the can 10. The welding line of the laser may extend radially.

However, the shape and structure of the first current collector plate 31 and the second current collector plate 32 are not limited by the above embodiment, and may be designed and changed in various ways. A structure in which the second current collector plate 32 is omitted is also possible. In this case, the lid 40 to be described later serves as the second current collector plate.

As illustrated in FIG. 7, the electrode assembly 20 may be accommodated in the can 10 in a state where the first current collector plate 31 is aligned toward the bottom portion 12 of the can 10. At this time, an insulator 19 may be interposed between the first current collector plate 31 and the bottom portion 12 of the can 10 to electrically insulate the first current collector plate 31 from the bottom portion 12.

In a state where the electrode assembly 20 is accommodated inside the can 10, the notching tab 27 of the second electrode 22 and the second current collector plate 32 may be disposed to face the opened end of the side wall portion 11.

The first terminal connection portion 312 of the first current collector plate 31 may be bonded to the first electrode terminal 13 fixed to the can 10 by means of resistance welding, ultrasonic welding, laser welding, or the like. A welding device for welding the first current collector plate 31 and the first electrode terminal 13 may approach the back surface of the center of the first terminal connection portion 312 of the first current collector plate 31 through the open part of the can 10, the hole 322 of the second current collector plate 32, and the winding center hole H of the electrode assembly 20 to perform welding. Of course, in addition to this, the first current collector plate 31 and the first electrode terminal 13 may also be bonded by means of brazing, soldering, or the like. That is, the first current collector plate 31 and the first electrode terminal 13 may be coupled to each other in various ways as long as they may be electrically connected and fixed to each other. However, the present disclosure does not exclude a structure in which the positive electrode tab is directly electrically connected to the positive electrode terminal in a state where the positive electrode current collector plate is omitted.

In a state where the electrode assembly 20 is accommodated in the can 10, the opened end of the can 10 may be sealed by covering it with a lid 40 as illustrated in FIG. 8.

The can 10 and the lid 40 may be thermally bonded. The circumference of the front end of the side wall portion 11 of the battery can 10 and the circumference of the edge of the lid 40 may be welded together along the circumferential direction. The contact point of the opened end of the can 10 and the lid 40 may be coupled. For example, the coupling point between the opened end of the can 10 and the lid 40 may be coupled by welding. For example, the lid 40 may be coupled to the can 10 using butt welding. This may be defined as a seam welding method. Since the fixing structure is simple, the volume of the electrode assembly 20 that can be accommodated within the can 10 may be further secured. Therefore, the seam welding method may be more advantageous in securing electric capacity compared to the same volume of the can 10.

Specifically, when the circumference of the opened end of the can 10 and the lid 40 are to be fixed by seam welding, a method of preparing a lid 40 provided with the injection port 42, accommodating an electrode assembly 20 inside the can 10, injecting an electrolyte through the injection port 42 provided at the lid 40 after seam welding of the can 10 and the lid 40, and sealing the injection port 42 with a plug 50 or the like to finish after completing the injection, may be applied.

According to this structure, by excluding the beading and crimping structures in the battery cell 1, it is possible to prevent the occurrence of various process errors that may arise from the beading and crimping structures. Additionally, process simplification may be achieved by omitting the beading and crimping processes. Furthermore, the formation of the beading and crimping structures may prevent the phenomenon in which the dead space within the battery increases in the winding axis direction of the electrode assembly 20 and thus energy density is lowered. Therefore, the battery cell 1 according to the present disclosure may increase the internal capacity in the same outer shape compared to the battery cell using the beading and crimping methods. That is, according to the structure as in the present disclosure, the energy density of the battery cell 1 may be improved.

The second terminal connection portion 324 of the second current collector plate 32 and the second end of the side wall portion 11 may be bonded by a method such as welding. The can 10 and the edge of the lid 40 may be sealed by a method such as welding. In one example, after the second current collector plate 32 and the can 10 are bonded, the lid 40 and the can 10 may be bonded. In another example, after the second current collector plate 32 and the lid 40 are bonded, the lid 40 and the can 10 may be bonded. In another example, the second current collector plate 32, the can 10, and the lid 40 may be welded at one time.

The edge of the lid 40 may by bonded to the edge of the opened end of the can 10 to be electrically connected. The can 10 or the inner surface of the lid 40 may be electrically connected to the second current collector plate 32. The second current collector plate 32 is bonded to the notching tab 27 of the second electrode 22 of the electrode assembly 20 accommodated inside the can 10 of the battery cell 1, and thus when the lid 40 is electrically connected to the second current collector plate 32, the lid 40 may also be electrically connected to the notching tab 27 of the second electrode 22 of the electrode assembly 20. However, in a structure where the second current collector plate 32 is omitted, the shape of the lid 40 may be changed so that the lid 40 may be directly electrically connected to the notching tab 27 of the second electrode 22 of the electrode assembly 20. That is, the lid 40 according to the present disclosure may be provided as a so-called integrated lid 40 capable of simultaneously performing the function of a current collector plate. Therefore, it is possible to increase the internal capacity in the same outer shape compared to the battery cell 1 with the current collector plate interposed therebetween. Therefore, the energy density of the battery cell 1 may be increased.

After sealing the can 10 with the lid 40, the electrolyte may be injected into the can 10 through the injection port 42 provided in the lid 40.

The lid 40 may be made of a metal material. Therefore, the lid 40 may have conductivity. For example, the lid 40 may include an aluminum material. The lid 40 may be made of, for example, low-carbon steel. The lid 40 may be made of, for example, nickel-plated steel (Ni plated steel), cold-rolled steel (SPCC or SPCE), or stainless steel (SUS). The lid 40 may be manufactured by, for example, molding a metal plate using a press. The lid 40 may be formed to have a thickness of, for example, 0.1 mm or more and 2.0 mm or less. The lid 40 may be formed to have a thickness of, for example, 0.3 mm or more and 1.0 mm or less.

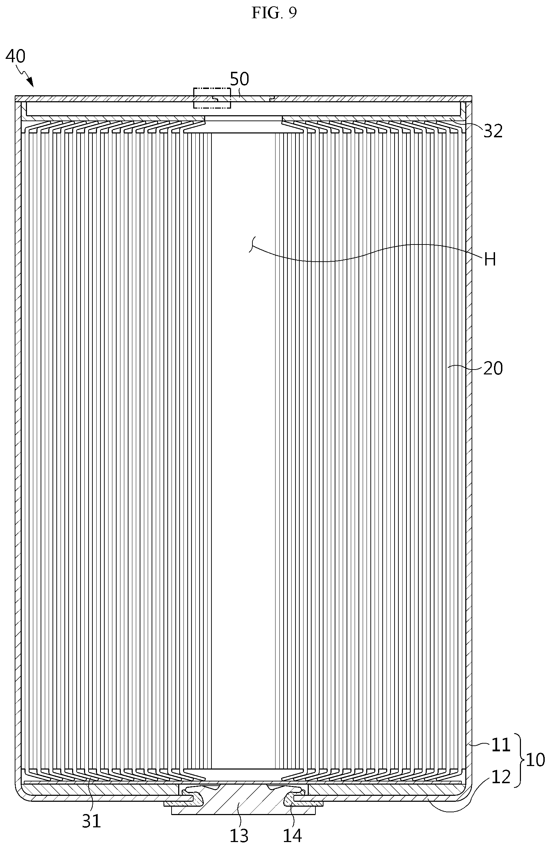

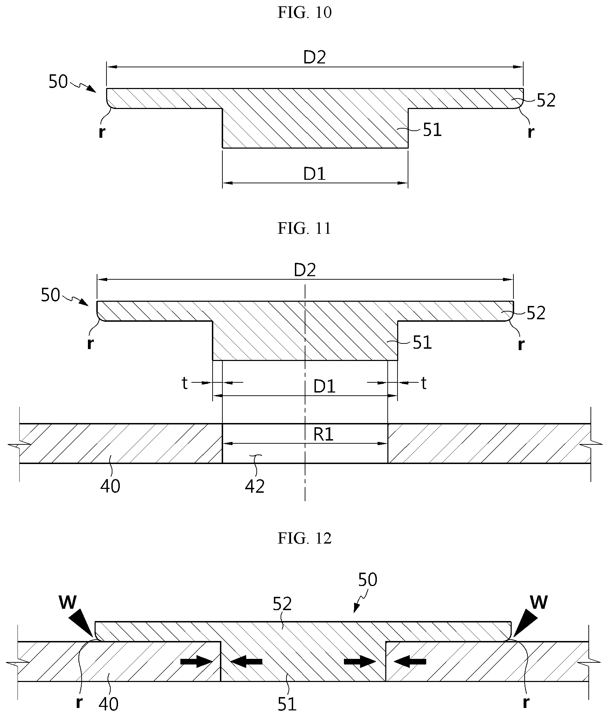

FIG. 9 is a cross-sectional view showing a state in which the injection port of a lid is sealed by a plug according to an embodiment of the present disclosure. FIG. 10 is a cross-sectional view showing a plug according to an embodiment of the present disclosure. FIG. 11 is a cross-sectional view showing a state in which a plug is inserted into a lid according to an embodiment of the present disclosure. FIG. 12 is a cross-sectional view showing a state in which a plug and a lid are coupled according to an embodiment of the present disclosure.

Referring to FIGS. 9 to 12, a battery cell 1 according to the present disclosure may include an electrode assembly 20, a can 10, a lid 40 in which an injection port 42 is formed, and a plug 50.

The lid 40 may have an injection port 42 formed in at least a partial region thereof. The injection port 42 may be formed at the center of the lid 40. At this time, the injection port 42 may be blocked by a plug 50. For example, the plug 50 may be press-fitted into the injection port 42. By blocking the injection port 42 by the plug 50, the airtightness of the battery cell 1 may be ensured.

The injection port 42 may, for example, serve as an electrolyte injection port. The center of the injection port 42 may coincide with the center of the winding center hole H of the electrode assembly 20. That is, the injection port 42 of the lid 40 may be positioned above the winding center hole H of the electrode assembly 20 in the winding axis direction.

Referring to FIGS. 9 and 10, the plug 50 may be configured to seal the injection port 42. That is, the plug 50 may be configured to be inserted into the injection port 42. At least a portion of the plug 50 may pass through the injection port 42. By inserting the plug 50 into the injection port 42 of the lid 40, the airtightness of the battery cell 1 may be secured. The plug 50 may pass through the injection port 42 formed in the lid 40 and be thermally bonded (welded) to the lid 40. Therefore, the exterior and interior of the can 10 may be sealed, and the leakage of the electrolyte may be prevented.

According to this structure, the beading and crimping processes may be omitted, thereby simplifying the manufacturing process. Furthermore, it is possible to prevent the phenomenon in which the dead space within the battery increases in the winding axis direction of the electrode assembly 20 due to the beading and crimping structure and thus the energy density is lowered. That is, according to the structure of the present disclosure, the energy density of the battery cell 1 may be improved.

The plug 50 may be configured to cover the injection port 42. The plug 50 may refer to, for example, a sealing member, stopper, or the like covering the injection port 42. The plug 50 may include at least one of low-carbon steel and copper (Cu).

At least a portion of the plug 50 may be press-fitted into the injection port 42. For example, the press-fit load of the plug 50 may be approximately 150 kgf or less.

The plug 50 may include an insertion portion 51 and a lid coupling portion 52. The insertion portion 51 and the lid coupling portion 52 may have a column shape with different diameters. The plug 50 may have a step in the radial direction.

The insertion portion 51 may be configured to be inserted into the injection port 42.

Referring to FIGS. 10 and 11, the diameter D1 of the insertion portion 51 may be larger than the inner diameter R1 of the injection port 42 (D1 > R1). For example, the overlap dimension or tolerance (t) between the diameter D1 of the insertion portion 51 and the inner diameter R1 of the injection port 42 may be 20 µm or more and 300 µm or less. For example, the overlap dimension or tolerance (t) between the diameter D1 of the insertion portion 51 and the inner diameter R1 of the injection port 42 may be 50 µm or more and 150 µm or less. For example, the tolerance (t) between the plug 50 and the injection port 42 may be approximately 70 µm or more and 150 µm or less in the radial direction. Here, the overlap dimension or tolerance (t) between the diameter D1 of the insertion portion 51 and the inner diameter R1 of the injection port 42 may refer to the distance between the outer surface of the insertion portion 51 formed on one side centered on the injection port 42 and the inner surface of the lid 40. That is, the insertion portion 51 may be forcibly fitted into the injection port 42.

According to an embodiment of the present disclosure, the diameter D1 of the insertion portion 51 of the plug 50 is formed to be larger than the inner diameter R1 of the injection port 42, so that the insertion portion 51 may be forcibly inserted into the injection port 42 through physical force, and the electrolyte formed therein may be prevented from flowing out of the injection port 42.

Additionally, according to the above embodiment of the present disclosure, by press-fitting the insertion portion 51 of the plug 50 into the injection port 42 before thermal bonding, it is possible to first secure a temporary sealing force enough to secure a sealing force against the pressure of the vaporized gas of the electrolyte due to the welding heat generated when thermally bonding the lid 40 and the lid coupling portion 52. Therefore, the deterioration of the welding quality due to the vaporization of the electrolyte may be prevented. For example, the temporary sealing force that can be secured by press-fitting the plug 50 may be 10⁻⁵ to 10⁻³ atm·cc/s based on He leak. Here, the He leak test may refer to a test that quantitatively evaluates whether there is a micro leakage of the target component by using helium gas (He) as a tracer gas for leak detection. Since this temporary sealing force is sufficient to suppress vapor emission, it is possible to prevent welding defects and the risk of electrolyte ignition during subsequent welding. That is, high airtightness may be secured.

Specifically, the welding heat generated during the process of coupling the lid 40 and the lid coupling portion 52 using a thermal bonding method such as laser welding may increase the partial pressure of the flammable electrolyte vapor, which has a relatively low boiling point of approximately 90°C, thereby causing this vapor to be released to the outside. If this released vapor comes into contact with the high-temperature plug 50 or lid 40, the risk of ignition or explosion may increase, or welding defects (e.g., porosity, incomplete bonding) may occur.

However, according to the present disclosure, by sealing the plug 50 using a forced press-fit method, this vapor leakage is blocked, and as a result, contact between the vapor and the high-temperature, molten plug 50 or lid 40 during welding may be prevented. Accordingly, the stability and reliability of the laser welding process may be improved, and deterioration of welding quality or ignition accidents may be prevented.

Additionally, according to the above embodiment of the present disclosure, the temporary sealing force is lower than the final sealing force, and thus the press-fit load of the plug 50 may be reduced compared to cases where the sealing force is secured solely by press-fit. Accordingly, localized plastic deformation or structural damage that may occur in the lid 40 or the can 10 due to excessive press-fit force may be effectively prevented.

The lid coupling portion 52 may be formed to extend upward from the insertion portion 51 in the winding axis direction. The lid coupling portion 52 may be seated on the lid 40.

The diameter D2 of the lid coupling portion 52 may be larger than the diameter D1 of the insertion portion 51 (D2 > D1). For example, the diameter D2 of the lid coupling portion 52 may be approximately at least 1.1 times and up to 1.5 times larger than the diameter D1 of the insertion portion 51. For example, the diameter D2 of the lid coupling portion 52 may be approximately 1.2 times larger than the diameter D1 of the insertion portion 51.

The side surfaces of the insertion portion 51 and the side surfaces of the lid coupling portion 52 may be spaced apart from each other in the horizontal direction. The edge part of the lid coupling portion 52 and the edge part of the insertion portion 51 may be spaced apart from each other in the horizontal direction.

Referring to FIG. 10, a rounding processing (r) may be applied to the lower edge of the lid coupling portion 52. This rounding processing (r) may minimize any steps or interference when in contact with the lid 40, thereby enabling precise and stable coupling without overlapping with the lid 40. This not only improves the ease of the assembly process but also alleviates mechanical stress concentration. Meanwhile, the shape of the lid coupling portion 52 is not limited to the above embodiment, and may be designed and changed in various ways. Additionally, other corner parts may also be subjected to the rounding processing (r) in the same manner. This may further improve the overall assemblability and durability of the components.

In general, when the relative distance between the insertion portion 51 and the lid coupling portion 52 is close, electrolyte vapor or residual vapor generated after electrolyte injection may be regasified by heat during welding and flow into the welding area of the lid coupling portion 52. Such vapor mixing may cause reduced weld strength, porosity formation, or a risk of ignition during the laser welding process.

According to the above embodiment of the present disclosure, by designing the insertion portion 51 and the lid coupling portion 52 to be spaced apart from each other at a certain distance or more, a structure in which that electrolyte vapor is difficult to reach the welding area may be provided. Therefore, it is possible to prevent the occurrence of welding defects and to prevent the risk of ignition due to electrolyte leakage.

The lid 40 and the lid coupling portion 52 of the plug 50 may be configured to be thermally bonded. The thermal bonding of the lid 40 and the lid coupling portion 52 may be performed by any one of welding W, brazing, and soldering. That is, the edge part of the lid coupling portion 52 may be configured to be spatially separated from the edge part of the insertion portion 51 by a specified distance in the horizontal direction. At this time, for example, the melting point of the lid coupling portion 52 may be approximately 100°C or higher and 1400°C or lower. That is, welding W may be performed between the lid coupling portion 52 and the lid 40 by applying heat of 100°C or higher and 1400°C or lower.

According to the above embodiment of the present disclosure, the welded area of the lid coupling portion 52 may be formed to be spaced apart from the injection port 42 (or insertion portion 51), thereby preventing electrolyte from flowing out to the welded area.

The thermal bonding between the lid 40 and the lid coupling portion 52 of the plug 50 may have a smaller area to be welded compared to seam welding. For example, in the case of a 4680 battery cell, the diameter of the lid 40 where seam welding is performed is approximately 46 mm, and the diameter D2 of the lid coupling portion 52 of the plug 50 where the thermal bonding between the lid 40 and the lid coupling portion 52 is performed may be approximately 10 mm or more and 15 mm or less. Since thermal deformation due to heat accumulation may occur during welding in a narrow area, tack welding may be required. Additionally, in terms with welding defects and heat concentration due to the generation of vaporized gas in the electrolyte, the high temperature around the injection port 42 may also cause the issue of ignition. However, according to the above embodiment of the present disclosure, the diameter D2 of the lid coupling portion 52 is formed larger than the diameter D1 of the insertion portion 51, thereby reducing thermal deformation during welding and solving welding defects and ignition issues.

That is, the sealing of the lid 40 and the plug 50 may be achieved by first securing a temporary sealing force by press-fitting the plug 50 into the injection port 42, and then welding W the lid coupling portion 52 of the plug 50 and the lid 40 to secure the final sealing force.

The final sealing force may be even larger than the temporary sealing force. For example, the final sealing force that can be secured by welding may be approximately 10⁻⁷ atm·cc/s or less based on He leak. That is, high airtightness may be secured.

According to the above embodiment of the present disclosure, since welding is performed after securing the temporary sealing force, it is possible to prevent the phenomenon such as the formation of gas channels or the occurrence of cracks during the welding process, thereby preventing defects of the lid coupling portion 52.

Additionally, according to the above embodiment of the present disclosure, since welding W is performed after securing the temporary sealing force, it is possible to prevent the phenomenon of electrolyte vapor leaking to the outside and being ignited during the welding process. Therefore, events resulting from thermal runaway in a vehicle including multiple battery cells, such as fire or explosion, may be prevented or delayed.

Moreover, the insertion portion 51 configured to secure the temporary sealing force and the lid coupling portion 52 configured to be thermally bonded are spaced apart in the axial direction, thereby preventing direct contact of electrolyte vapor with the welded area.

As a comparative example, a method of inserting a plastic ball after electrolyte injection and then inserting a separate plug to complete welding may be considered. In this case, two unit components are required: the plastic ball and the plug. The number of processes is three: inserting the plastic ball, inserting the plug, and welding.

Compared to the comparative example, according to an embodiment of the present disclosure, only one plug 50 component may be included without additional configuration. That is, the insertion portion 51 of the plug 50 may be configured to be press-fitted into the injection port 42, and the lid coupling portion 52 of the plug 50 may be configured to be welded to the lid 40. Accordingly, compared to the comparative example, the number of components is reduced to one and the number of processes is reduced to two, which may simplify the method.

Additionally, according to the comparative example, when inserting a separate plug after inserting a plastic ball, the welding area of the plastic ball and the plug should be configured to be spaced apart at a constant distance in the length direction to prevent electrolyte vapor from being ignited due to the welding heat. At this time, when making a deep injection port in the depth direction, the width of the injection port should be made narrow to avoid interference with the electrode assembly, and in this case, the injection efficiency may be reduced.

Compared to the comparative example, according to the embodiment of the present disclosure, since both temporary sealing force and final sealing force are provided by one plug 50 component, the length of a pipe portion defining the injection port 42 in the winding axis direction may be reduced, thereby preventing the pipe portion from interfering with the electrode assembly. Accordingly, the inner diameter R1 of the injection port 42 may be increased, and the injection efficiency may be improved. In addition, it is possible to minimize the phenomenon in which the welding heat of the plug 50 affects the electrode assembly or the electrolyte.

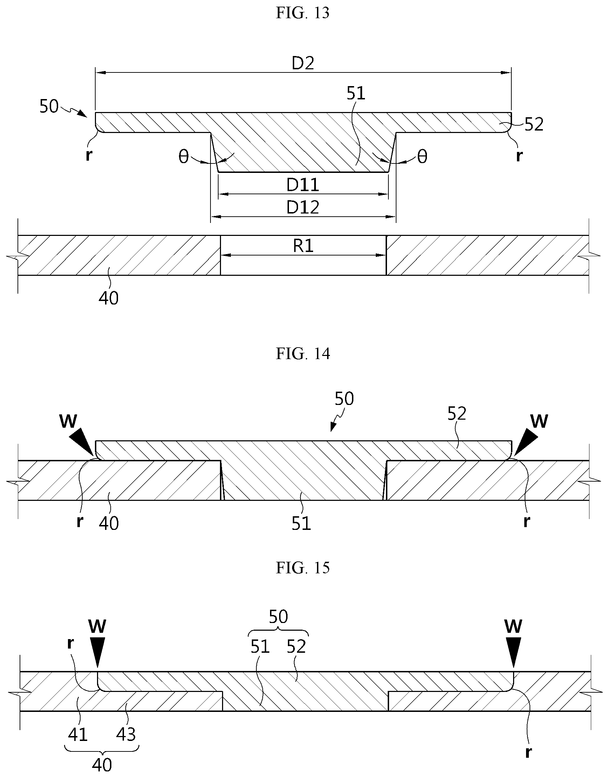

FIG. 13 is a cross-sectional view showing a state in which a plug is inserted into a lid according to another embodiment of the present disclosure. FIG. 14 is a cross-sectional view showing a state in which a plug and a lid are coupled according to another embodiment of the present disclosure.

The configuration of the lid 40 and the plug 50 and the welding W process for the lid 40 and the plug 50 are the same as those described with reference to FIGS. 9 to 12, and thus a repeated description thereof will be omitted.

The side surface of the insertion portion 51 may be an inclined surface inclined at a specified angle (θ).

The diameter D11 of the lower surface of the insertion portion 51 may be formed smaller than the diameter D12 of the upper surface of the insertion portion 51 (D11 < D12). Accordingly, the insertion portion 51 may have a tapered shape that gradually expands from the lower surface toward the upper surface. That is, the insertion portion 51 may have, for example, a truncated cone shape. At this time, for example, the inclined angle (θ) of the side surface of the insertion portion 51 may be an angle inclined by approximately 10 to 20 degrees with respect to the winding axis direction.

At this time, the inner diameter R1 of the injection port 42 may be larger than the diameter D11 of the lower surface of the insertion portion 51 and smaller than the diameter D12 of the upper surface of the insertion portion 51 (D11 < R1 < D12).

For example, the diameter D12 of the upper surface of the insertion portion 51 may be larger than the inner diameter R1 of the injection port 42 by approximately 0.05 mm or more and 0.40 mm or less. For example, the diameter D12 of the upper surface of the insertion portion 51 may be larger than the inner diameter R1 of the injection port 42 by approximately 0.05 mm or more and 0.20 mm or less. For example, the diameter D12 of the upper surface of the insertion portion 51 may be larger than the inner diameter R1 of the injection port 42 by approximately 0.05 mm or more and 0.10 mm or less. For example, the overlap dimension of the diameter D12 of the upper surface of the insertion portion 51 and the inner diameter R1 of the injection port 42 may be approximately 0.025 mm or more and 0.20 mm or less in the radial direction.

According to an embodiment of the present disclosure, the lower surface of the insertion portion 51 may be easily inserted into the injection port 42 due to its relatively small diameter, and the upper surface of the insertion portion 51 may be formed to be larger than the inner diameter R1 of the injection port, thereby effectively sealing the injection port 42. The plug 50 may be inserted into the injection port 42 in a mechanical press-fit method. At this time, the upper outer circumferential surface of the insertion portion 51 may be tightly pressed against the inner circumferential surface of the injection port 42 while interfering therewith. Therefore, it is possible to effectively block the leakage of internal electrolyte vapor or gas to the outside.

When increasing the press-fit strength to secure high sealing characteristics during press-fit of the plug 50, the lid 40 may sag downward to cause physical damage to the electrode assembly 20 in severe cases, and in this case, there is a risk of a short circuit. In the present disclosure, the overlap dimension of the plug 50 and the lid and the press-fit load may be set to minimize the downward sagging of the lid 40.

In other words, the plug 50 is forcibly press-fitted to prevent electrolyte vapor from leaking to the outside, which may prevent welding defects and ignition during laser welding. That is, it is possible to prevent the occurrence of welding defects and the risk of ignition by mixing the leakage liquid of the electrolyte vapor into the lid coupling portion 52. In other words, it is possible to prevent the electrolyte vapor, which is released to the outside by increasing the partial pressure of the flammable vapor due to welding heat (heat conduction) when welding, from contacting with the molten material during welding.

FIG. 15 is a cross-sectional view showing a state in which a lid and a plug are coupled according to still another embodiment of the present disclosure.

The lid 40 may include a body portion 41 and a plug coupling portion 43. The lid 40 may have a step formed in the radial direction based on the periphery of the injection port (e.g., the injection port 42 of FIG. 11). The lid 40 may be divided into the body portion 41 and the plug coupling portion 43 based on the step.

The body portion 41 may be configured to be coupled to the can 10. The edge of the body portion 41 may be in perpendicular contact with the opened end of the can 10. The body portion 41 may be welded W along the circumferential direction of the part in contact with the opened end of the can 10, which may be defined as a seam welding (this has been described above).

At this time, the lid coupling portion 52 of the plug 50 and the body portion 41 of the lid 40 may be configured to face each other in the radial direction and be welded W.

The plug coupling portion 43 may surround the injection port 42 and be recessed downward relative to the body portion 41 in the winding axis direction, and may be configured to allow the lid coupling portion 52 to be seated.

The plug coupling portion 43 may be positioned further radially inward than the body portion 41. The upper surface of the plug coupling portion 43 may be disposed lower than the upper surface of the body portion 41. That is, a step is formed between the plug coupling portion 43 and the body portion 41, and the step may be in a ring shape extending in the circumferential direction around the injection port 42. The step may be formed by forging.

The thickness of the plug coupling portion 43 in the winding direction may be formed thinner than the thickness of the body portion 41 in the winding axis direction. The plug 50 may be seated on the plug coupling portion 43. The lid coupling portion 52 of the plug 50 may be seated on the plug coupling portion 43.

Referring to FIG. 15, a rounding processing (r) may be applied to the lower edge of the lid coupling portion 52. This rounding processing (r) may minimize any steps or interference when coupled to the step formed between the body portion 41 of the lid 40 and the plug coupling portion 43, thereby enabling precise and stable coupling without overlapping with the lid 40. This not only improves the ease of the assembly process but also alleviates mechanical stress concentration. Meanwhile, the shape of the lid coupling portion 52 is not limited to the above embodiment, and may be designed and changed in various ways. Additionally, other corner parts may also be subjected to the rounding processing(r) in the same manner. This may further improve the overall assemblability and durability of the components.

According to the above embodiment of the present disclosure, a structure in which the lid coupling portion 52 of the plug 50 may be seated may be formed by forging the periphery of the injection port 42.

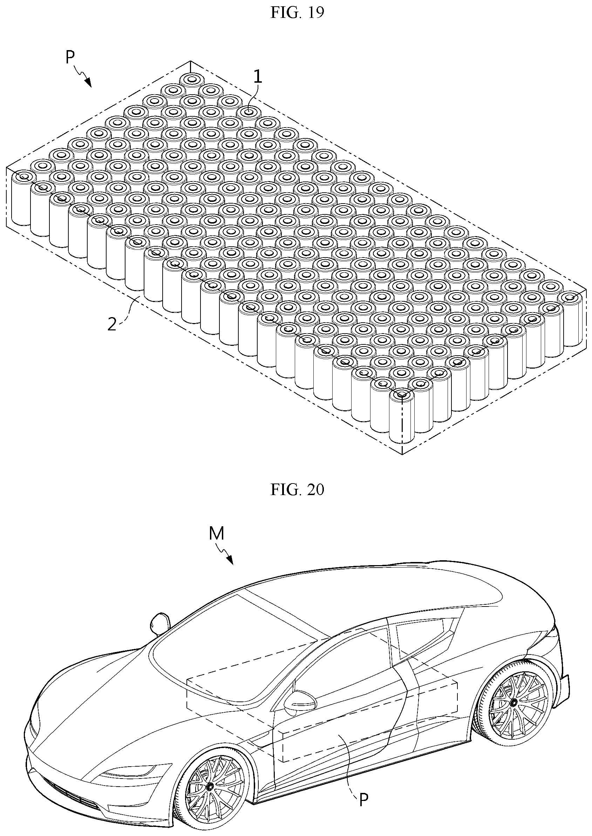

Additionally, according to the above embodiment of the present disclosure, the plug coupling portion 43 to which the plug 50 is coupled is formed to be recessed downward toward the electrode assembly 20, so that the overall height of the battery cell 1 may remain constant even when the plug 50 is coupled. That is, in a state where the plug 50 and the lid 40 are coupled, the upper surface of the plug 50 may not protrude upward beyond the upper surface of the lid 40. In other words, the total height deviation of the battery cell 1 may not occur. Therefore, the contact part and/or contact area with a component (e.g., a heat sink) disposed on the upper side of the lid 40 may not be restricted by the plug 50 and may be maximized. As a result, the cooling performance of the battery cell 1 and/or battery pack (e.g., the battery pack P of FIG. 19) may be improved.

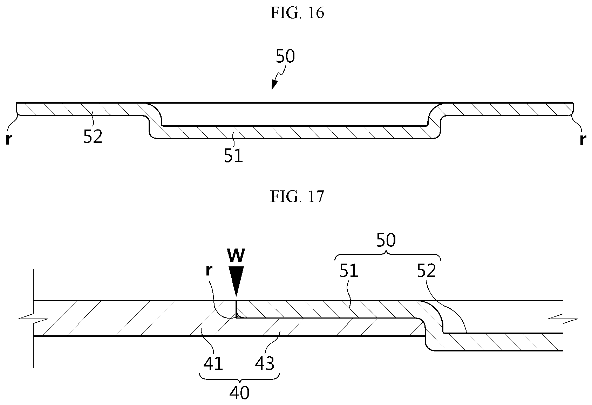

FIG. 16 is a cross-sectional view showing a plug according to still another embodiment of the present disclosure. FIG. 17 is a cross-sectional view showing a state in which a lid and a plug are coupled according to still another embodiment of the present disclosure.

The configuration of the lid 40 and the plug 50 and the welding W process for the lid 40 and the plug 50 are the same as those described with reference to FIGS. 9 to 15, and thus a repeated description thereof will be omitted.

The lid coupling portion 52 and the insertion portion 51 of the plug 50 may have substantially the same thickness in the winding axis direction. The lid coupling portion 52 and the insertion portion 51 of the plug 50 may be formed integrally. That is, the plug 50 may be bent between the lid coupling portion 52 and the insertion portion 51.

The plug 50 may be configured to be molded by a drawing method. The drawing method may refer to a processing method for stretching and thinning metal into a desired shape. The drawing method may be a process of drawing a material such as a metal sheet or wire through a mold and stretching it. For example, a deep drawing process may be a method of molding a plate into a deep container shape using a punch or die. Specifically, the plug 50 may be manufactured by molding by a deep drawing method. Specifically, the plug 50 may be manufactured by fixing the end of a plug preform, which is a plate-shaped material of a certain thickness, and pressing the center of the plug preform.

According to the above embodiment of the present disclosure using the drawing method, the radial separation distance between the lid coupling portion 52 and the insertion portion 51 may be formed relatively longer compared to the forging method. Therefore, it is possible to prevent direct contact of electrolyte vaporization gas generated by welding heat with the lid coupling portion 52. That is, the electrolyte vaporization path may further extend. Therefore, welding defects caused by the vaporization heat of the electrolyte may be prevented.

According to the above embodiment of the present disclosure, the plug 50 is manufactured by a drawing method, which may reduce the weight of the plug 50 to contribute to the weight reduction of the battery cell 1. Additionally, the manufacturing cost of the plug 50 is reduced, and the processing method of the plug 50 is simple and easy, which may shorten the manufacturing time.

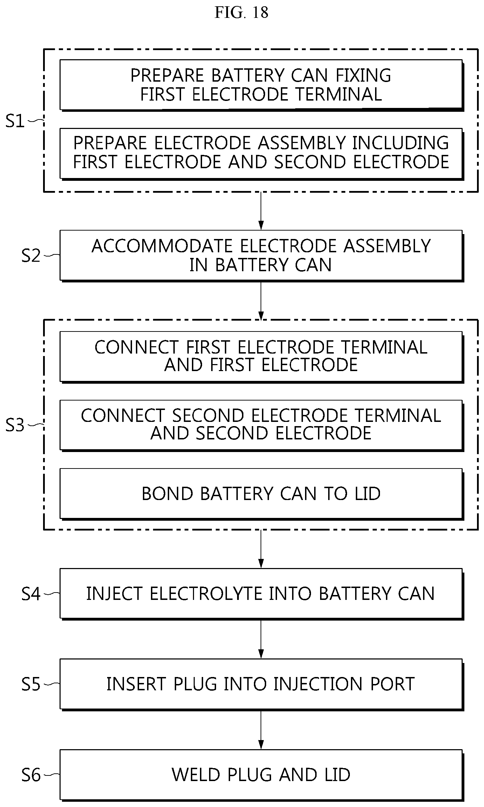

FIG. 18 is a flowchart of a method for manufacturing a battery cell to which the injection port sealing structure of the present disclosure is applied. Hereinafter, a method for manufacturing a battery cell according to an embodiment of the present disclosure will be described with reference to FIG. 18. For convenience of description, it may be described with reference to the drawings of FIGS. 1 to 17.

First, a can 10 in which a first electrode terminal 13 is fixed in an insulating seal to a bottom portion 12, and an electrode assembly 20 including a first current collector plate 31 and a second current collector plate 32 welded to the first electrode and the second electrode at both ends, respectively, may be prepared (S1).

Subsequently, a step of covering the opened end with the lid 40 while the electrode assembly 20 is accommodated in the can 10 may be included (S2).

The electrode assembly 20 may be accommodated in the can 10 in a state where the first current collector plate 31 is aligned toward the bottom portion 12 of the can 10. At this time, an insulator 19 may be interposed between the first current collector plate 31 and the bottom portion 12 of the can 10 to electrically insulate the first current collector plate 31 from the bottom portion 12.

A step of bonding the edge of the lid 40 to the can 10 may be included (S3). The lid 40 and the can 10 may be thermally bonded.

The circumference of the front end of the side wall portion 11 of the battery can 10 and the circumference of the edge of the lid 40 may be welded together along the circumferential direction. The contact point of the opened end of the can 10 and the lid 40 may be coupled. For example, the coupling point between the opened end of the can 10 and the lid 40 may be coupled by welding. For example, the lid 40 may be coupled to the can 10 using butt welding. This may be defined as a seam welding method.

Additionally, before bonding the edge of the lid 40 to the can 10, the first current collector plate 31 may be thermally bonded to the first electrode terminal 13. Additionally, the opened end of the can 10 is sealed by covering it with a lid 40, and in order to allow the second current collector plate 32 to be electrically connected to the can 10 and the lid 40, which are the second electrode terminals 15, the second current collector plate 32 may be bonded to the can 10 and/or the lid 40, and the lid 40 and the can 10 may be thermally bonded.

Next, a step of injecting an electrolyte into the battery can 10 through the injection port 42 of the lid 40 may be included (S4). According to an embodiment, a step of removing residual electrolyte from the injection port 42 may be further included after completing the electrolyte injection, before sealing the injection port 42 with the plug 50.

Next, a step of inserting the plug 50 into the injection port 42 after the electrolyte injection may be included (S5). The insertion portion 51 of the plug 50 may be configured to be inserted into the injection port 42. For example, the insertion portion 51 may be inserted into the injection port 42 in a force-fit manner. The insertion portion 51 may be fitted into the injection port 42 to primarily seal the injection port 42.

According to the above embodiment of the present disclosure, the plug 50 has an insertion portion 51, thereby allowing it to be press-fitted into the injection port 42 and remain fixed even before welding. Additionally, the plug 50 may be prevented from being detached from the injection port 42 while being transferred to the welding device. That is, a temporary sealing force may be secured first by press-fitting the insertion portion 51 of the plug 50 into the injection port 42 before welding the lid 40 and the plug 50.

Finally, a step of welding the plug 50 and the lid 40 may be included (S6).

The sealing finish may first secure the temporary sealing force by press-fitting the plug 50 into the injection port 42, and then secure the final sealing force by welding and sealing the lid coupling portion 52 of the plug 50 and the lid 40.

For example, the lid coupling portion 52 of the plug 50 and the body portion 41 of the lid 40 may be laser welded. Laser welding may be defined as a process of melting and bonding metals using a laser beam having high energy density.

According to the above embodiment of the present disclosure, since welding is performed after securing the temporary sealing force, it is possible to prevent the phenomenon such as the formation of gas channels or the occurrence of cracks during the welding process, thereby preventing defects of the lid coupling portion 52.

Additionally, according to the above embodiment of the present disclosure, since welding is performed after securing the temporary sealing force, it is possible to prevent the phenomenon of electrolyte vapor leaking to the outside and being ignited during the welding process.

FIG. 19 is a view for describing a battery pack according to an embodiment of the present disclosure. FIG. 20 is a view for describing a vehicle including the battery pack of FIG. 19.

Referring to FIG. 19, a battery pack P according to the present disclosure may include at least one battery cell 1 according to the present disclosure described above. Additionally, the battery pack P according to the present disclosure may include a pack housing 2 capable of accommodating the at least one battery cell 1. The battery pack P may be configured using a battery module, which is an intermediate form of assembly, or may be configured directly without a battery module as illustrated. Since the battery cell 1 itself has a large volume, there may be no particular difficulty in implementing the battery pack P even without using an intermediate structure called a battery module.

In addition, the battery pack P may further include various components in addition to the battery cell 1, for example, components of the battery pack P known at the time of filing of the present disclosure, such as a BMS, a relay, a current sensor, and the like.

A plurality of battery cells 1 may be included in the battery pack P. The battery cells 1 may be arranged in a predetermined number of rows, and may be arranged so that both the first electrode terminal 13 and the second electrode terminal 15 are placed on the upper side in each battery cell 1. Therefore, when electrically connecting the plurality of battery cells 1, both the positive electrode and the negative electrode may be connected in one direction, thereby simplifying the electrical connection structure. Accordingly, energy density may be improved by increasing the number of battery cells 1 that can be mounted in the same space, and electrical wiring work may be facilitated. Therefore, the space efficiency is excellent, and the electrical wiring efficiency is high, which has a significant improvement effect in the assembly process of an electric vehicle, and the assembly and maintenance of the battery pack P. And, each battery cell 1 may have a higher energy density than a conventional cell, as described above. The battery pack P with the increased energy density in this way may store the same energy while reducing the volume and weight thereof.

Therefore, if the battery pack P to which these battery cells 1 are applied is mounted on a vehicle such as a vehicle M using electricity as an energy source as illustrated in FIG. 20, the mileage of the vehicle per unit of energy may be further expanded.

Additionally, the battery pack P may further include a heat sink. The pack housing 2 may accommodate the heat sink. The heat sink may be, for example, disposed below the battery cell 1. In this case, the heat sink may contact the lid 40 (e.g., the lid 40 of FIG. 9) and/or the plug 50 (e.g., the plug 50 of FIG. 9) of the battery cell 1.

Referring to FIG. 20, a vehicle M according to the present disclosure may include at least one battery pack P according to the present disclosure.

The battery cell 1 according to the present disclosure may be applied to vehicles such as electric vehicles or hybrid vehicles. That is, the vehicle M according to the present disclosure may include the battery cell 1 according to the present disclosure or the battery pack P according to the present disclosure. Additionally, the vehicle M according to the present disclosure may further include various other components included in the vehicle, in addition to the battery cell 1 or the battery pack P. For example, the vehicle M according to the present disclosure may further include a vehicle body, a motor, a control device such as an electronic control unit (ECU), and the like, in addition to the battery cell 1 according to the present disclosure. The vehicle M includes a four-wheeled vehicle and a two-wheeled vehicle. The vehicle M may be operated by receiving power from the battery pack P according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery cell comprising:
an electrode assembly in which a first electrode, a second electrode, and a separator interposed therebetween are wound around a winding axis;
a can configured to accommodate the electrode assembly through an opened end formed on one side;
a lid covering the opened end and having an injection port; and
a plug configured to seal the injection port,
wherein the plug comprises an insertion portion configured to be inserted into the injection port and a lid coupling portion formed to extend upward from the insertion portion in the winding axis direction and seated on the lid, and
wherein the diameter of the insertion portion is larger than the inner diameter of the injection port.

2. The battery cell according to claim 1,
wherein a tolerance between the diameter of the insertion portion and the inner diameter of the injection port is 50 µm or more and 150 µm or less.

3. The battery cell according to claim 1,
wherein the diameter of the lid coupling portion is larger than the diameter of the insertion portion.

4. The battery cell according to claim 3,
wherein the diameter of the lid coupling portion is at least 1.1 times and up to 1.5 times larger than the diameter of the insertion portion.

5. The battery cell according to claim 1,
wherein the side surface of the insertion portion and the side surface of the lid coupling portion are spaced apart from each other in the horizontal direction.

6. The battery cell according to claim 1,
wherein the side surface of the insertion portion is an inclined surface inclined at a specified angle.

7. The battery cell according to claim 6,
wherein the diameter of the lower surface of the insertion portion is formed smaller than the diameter of the upper surface of the insertion portion, and
wherein the inner diameter of the injection port is larger than the diameter of the lower surface of the insertion portion and smaller than the diameter of the upper surface of the insertion portion.

8. The battery cell according to claim 1,
wherein the lid comprises a body portion; and a plug coupling portion surrounding the injection port, recessed downward relative to the body portion in the winding axis direction, and configured to allow the lid coupling portion to be seated.

9. The battery cell according to claim 8,
wherein the lid coupling portion of the plug and the body portion of the lid face each other in a radial direction and are configured to be welded.

10. The battery cell according to claim 1,
wherein the can and the lid are thermally bonded.

11. A method for manufacturing a battery cell according to any one of claims 1 to 10, the method comprising:
a step of covering an opened end of a can with a lid while accommodating an electrode assembly in the can;
a step of thermally bonding the edge of the lid to the can;
a step of injecting an electrolyte into the can through an injection port of the lid;
a step of sealing the injection port by inserting an insertion portion of a plug into the injection port; and
a step of welding the lid to a lid coupling portion formed to extend upward from the insertion portion of the plug in the winding axis direction and seated on the lid.

12. A battery pack comprising a battery cell according to any one of claims 1 to 10.

13. A vehicle equipped with a battery pack according to claim 12.
